# FASCICULE DE BREVET EUROPEEN

(11) **EP 1 128 052 B1**
(45) Date de publication et mention de la délivrance du brevet: **22.03.2006**
(21) Numéro de dépôt: 01400196.0
(22) Date de dépôt: 25.01.2001
(51) Int. Cl.: F02K 1/72

(54) **Inverseur de poussée à grilles aubagées de déviation à structure arrière fixe**
Schubumkehrvorrichtung mit beschaufeltem Gitter und festmontierter hinterer Struktur
Thrust reverser with bladed cascades and fixed rear structure

(30) Priorité: 27.01.2000 FR 0001022
(43) Date de publication de la demande: 29.08.2001
(73) Titulaire: AIRCELLE, 76700 Gonfreville l'Orcher (FR)
(72) Inventeur: Jean, Michel Christian Marie, 76290 Montivilliers (FR); Lardy, Pascal, 76600 Le Havre (FR); Vicogne, Laurent Marcel, 76133 Rolleville (FR)
(74) Mandataire: Chevalier, Renaud Philippe

(56) Documents cités:
- GB-A- 1 207 938
- GB-A- 1 303 875
- US-A- 3 691 771
- US-A- 3 779 010
- US-A- 3 815 357
- US-A- 4 147 029
- US-A- 4 698 964
- US-A- 4 801 112
- US-A- 4 960 243
- US-A- 5 054 285

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

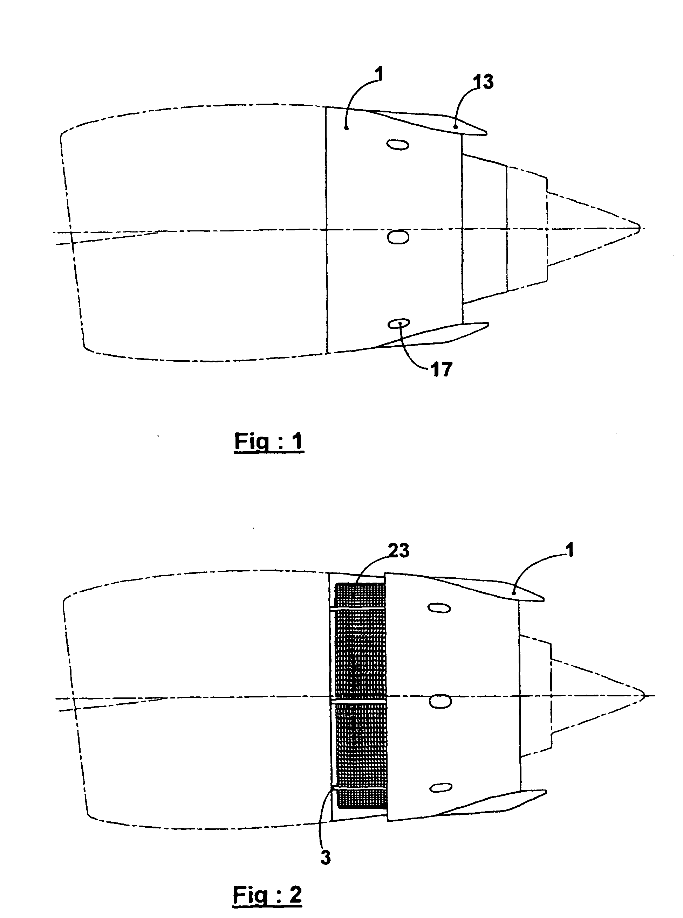

Les figures 1 à 10 des dessins joints montrent un exemple connu de réalisation d'un inverseur de poussée de ce type, appliqué à un turboréacteur à double flux.

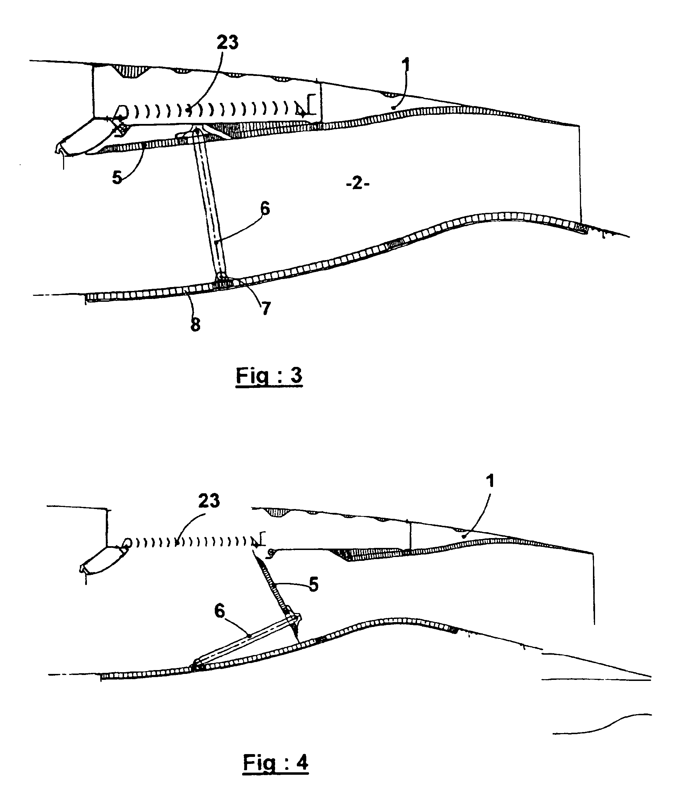

Dans cet exemple d'application, un dispositif d'inversion dit à grilles dans lequel un ensemble mobile 1, formant, lors du fonctionnement du turboréacteur en poussée directe, tout ou une partie de l'extrémité aval de la paroi externe du canal annulaire 2 de circulation de la veine de flux secondaire, est susceptible d'être déplacé axialement en direction aval au moyen d'un système de commande comportant par exemple des vérins 3 fixés sur la partie amont 4 de l'inverseur et un déplacement de l'ensemble mobile 1 vers l'aval entraîne le pivotement d'une pluralité de volets 5 qui viennent obturer le canal et dévier le flux pour former un flux inversé dont le guidage est obtenu au moyen d'un dispositif à grilles 23 disposées sur la périphérie externe dudit canal et qui sont découvertes après déplacement vers l'aval dudit ensemble mobile 1, comme le montrent les figures 2 et 4.

Dans les réalisations connues d'un tel inverseur de poussée de turboréacteur, l'inverseur de poussée est constitué de deux parties, chaque partie comportant une partie demi-cylindrique dudit ensemble mobile 1 dont les moyens de déplacement comportent par exemple, trois vérins 3 et le pivotement desdits volets 5 est guidé par exemple par des biellettes 6 de liaison à un point fixe d'articulation 7 de biellette situé sur la paroi interne 8 dudit canal secondaire.

Des exemples de réalisation de tels inverseurs de poussée sont donnés par EP-A-0 109 219 et par US-A-3 500 645. Les dispositions connues et appliquées dans la réalisation de tels inverseurs de poussée entraînent cependant certains problèmes insuffisamment résolus.

En effet, les objectifs de réduction de masse rendent difficile l'obtention d'une structure de l'ensemble mobile 1 suffisamment rigide, ce qui entraîne, d'un point de vue aérodynamique, une section d'éjection insuffisamment stable.

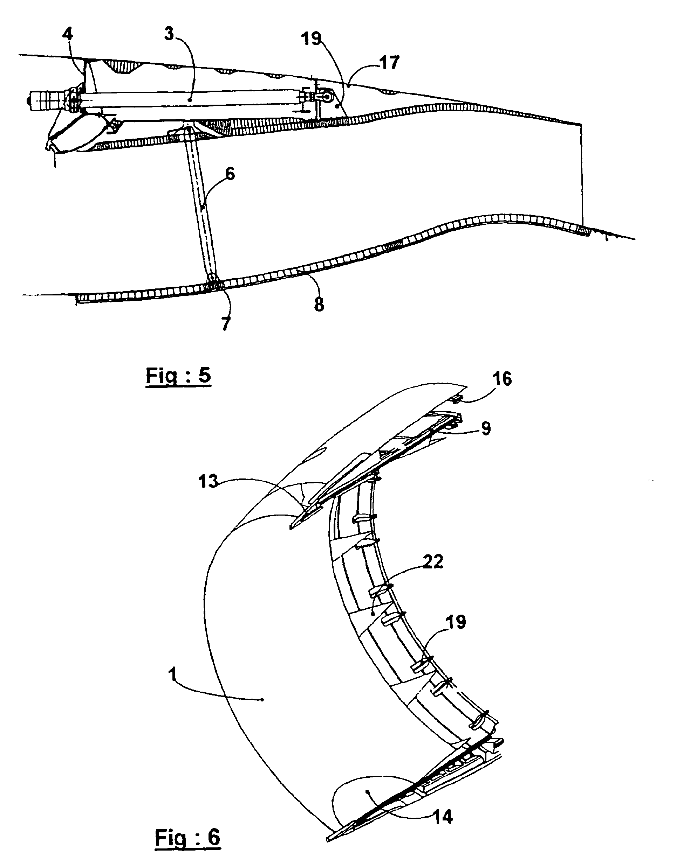

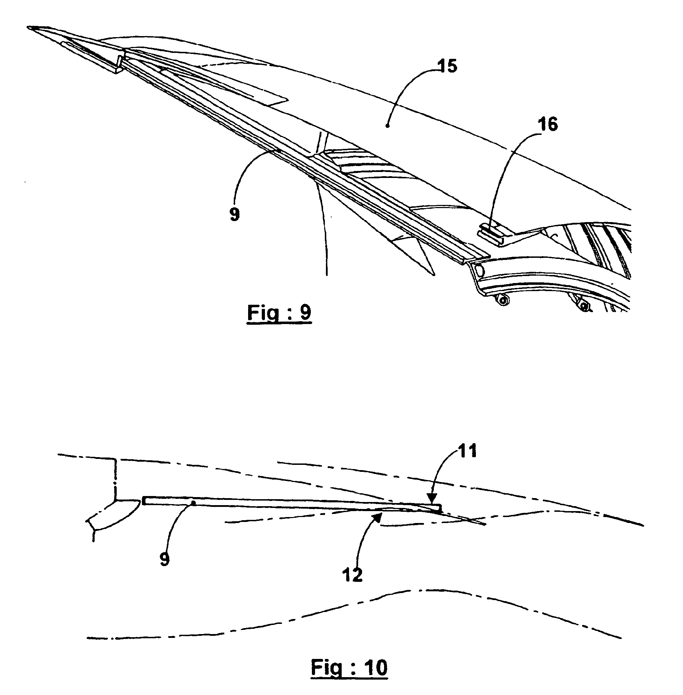

Les déplacements de l'ensemble mobile 1 nécessitent la mise en place de rails primaires 9, représentés sur les figures 6 à 10, qui du fait de leur longueur sortent des lignes de nacelle dans les zones externes 11 et internes 12 indiquées sur la figure 10, imposant de les caréner par des capotages externes tels que 13 ou internes tels que 14. En outre, le guidage et le renforçage structural du panneau externe 15 de l'ensemble mobile 1 imposent la mise en place de rails secondaires 16. Sur l'ensemble mobile 1, des trappes 17 sont aménagées permettant l'accès aux vérins 3. Le point d'application des vérins 3 est situé sur des ferrures 19 placées dans la partie arrière de l'ensemble mobile 1.

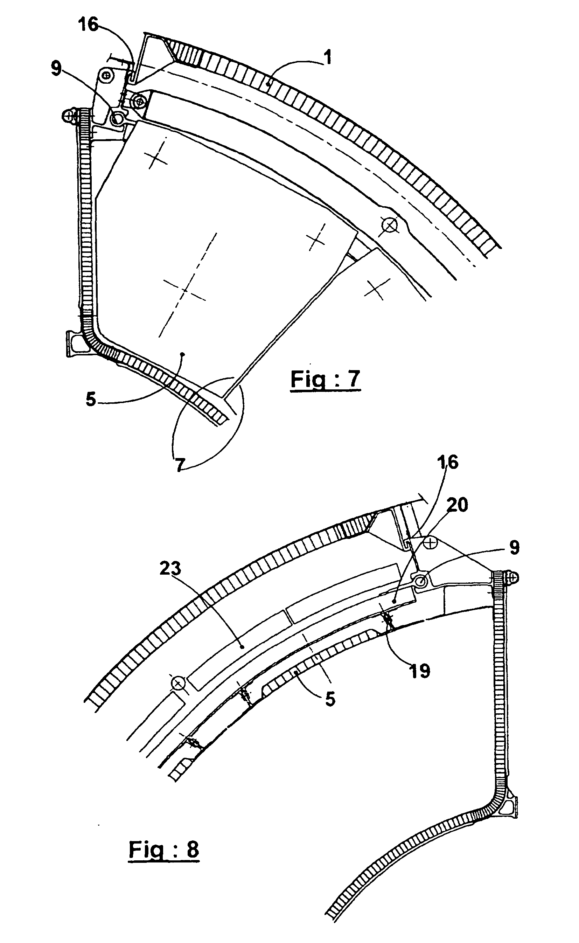

Comme cela est représenté sur les figures 6 à 8, les volets 5 sont articulés sur des ferrures 19 portées par le panneau interne 20 de l'ensemble mobile 1. Les volets 5 comportent un contour suivant les détourages 21 représentés sur la figure 7 leur évitant d'interférer en position de jet inversé mais des coins 22 de volet sont nécessaires pour combler les ouvertures créées en jet direct.

Le document US 3 779 010 décrit un inverseur de poussée de turboréacteur à double flux comportant un ensemble mobile formant une partie de la paroi externe de nacelle, complété par un ensemble annulaire de volets formant une partie de la paroi externe du canal annulaire de la veine froide en position de poussée directe et, en position d'inversion de poussée , ledit ensemble mobile étant translaté vers l'arriére en découvrant des grilles aubagées de déviation de flux et les volets pivotant pour obstruer ledit canal, et étant constitué d'un capot mobile équipé de ferrures supportant les volets.

Les buts de l'invention sont de supprimer les inconvénients des solutions connues antérieures des inverseurs de poussée à grilles classiques rappelés ci-dessus tout en assurant une construction simplifiée, en réduisant la masse et en améliorant les performances aérodynamiques obtenues.

Ces buts sont atteints, conformément à l'invention, par un inverseur de poussée du type précité caractérisé en ce qu'il comporte une structure arrière fixe supportant des galets roulant sur les volets ou une rampe des volets, de manière à décaler les volets afin d'éviter toute interférence entre structure arrière fixe et volets pendant une première phase d'ouverture.

Quelques aménagements avantageux complémentaires concernent le mode d'entraînement des volets.

D'autres caractéristiques et avantages de l'invention seront mieux compris à la lecture de la description qui va suivre des modes de réalisation de l'invention, en référence aux dessins annexés sur lesquels :
- les figures 1 à 10 qui ont fait précédemment l'objet d'une description montrent un inverseur de poussée à grilles d'un type connu en soi de l'art antérieur, suivant les vues suivantes, respectivement :

- la figure 1, une vue extérieure de nacelle équipée dudit inverseur, en position de jet direct ;
- la figure 2, une vue analogue de l'inverseur de la figure 1, en position de jet inversé ;
- la figure 3, une demi-vue schématique, en coupe longitudinale par un plan passant par l'axe de rotation d'un turboréacteur associé, de l'inverseur de la figure 1, en position de jet direct ;
- la figure 4, une vue analogue de l'inverseur de la figure 3, en position de jet inversé ;
- la figure 5, une vue analogue à celle de la figure 3, montrant l'installation d'un vérin de commande des déplacements ;
- la figure 6, une vue en perspective de l'ensemble mobile de l'inverseur représenté sur les figures 1 à 5 ;
- la figure 7 montre un détail de l'inverseur précédent, en position de jet inversé, dans la zone dite à 12 heures ;
- la figure 8 montre un détail de l'inverseur précédent, en position de jet direct, dans la zone dite à 12 heures ;
- la figure 9 montre en perspective un détail de l'ensemble mobile représenté sur la figure 6, dans la zone dite à 12 heures ;
- la figure 10 montre un détail schématique de la figure 3 représentant la position d'un rail primaire de l'inverseur ;
- la figure 11 représente dans une vue analogue à la figure 3 un inverseur de poussée à grilles, en position de jet direct, selon un mode de réalisation de l'invention ;
- la figure 12 représente l'inverseur de la figure 11, en début d'ouverture ;
- la figure 13 représente l'inverseur de la figure 11, en position de jet inversé ;
- la figure 14 représente selon une vue partielle en perspective l'inverseur de la figure 11, montrant les volets lorsque l'ensemble mobile est retiré ;
- la figure 15 représente l'inverseur de la figure 11, montrant un système d'entraînement des volets ;
- la figure 16 représente dans une vue analogue à la figure 11 une variante de réalisation de l'inverseur conforme à l'invention ;
- la figure 17 représente dans une vue analogue à la figure 11 l'inverseur conforme à l'invention comportant une variante de réalisation du système d'entraînement des volets ;
- la figure 18 représente l'inverseur de la figure 17 en début d'ouverture ;
- la figure 19 représente l'inverseur de la figure 17, en cours d'ouverture ;
- la figure 20 représente l'inverseur de la figure 17,en position de jet inversé ;
- la figure 21 représente l'inverseur de la figure 17, selon une vue analogue à celle de la figure 14 ;
- la figure 22 représente dans une vue analogue aux figures 11 ou 17 l'inverseur conforme à l'invention comportant une variante de réalisation des volets en deux parties ;
- la figure 23 représente l'inverseur de la figure 22, en début d'ouverture ;

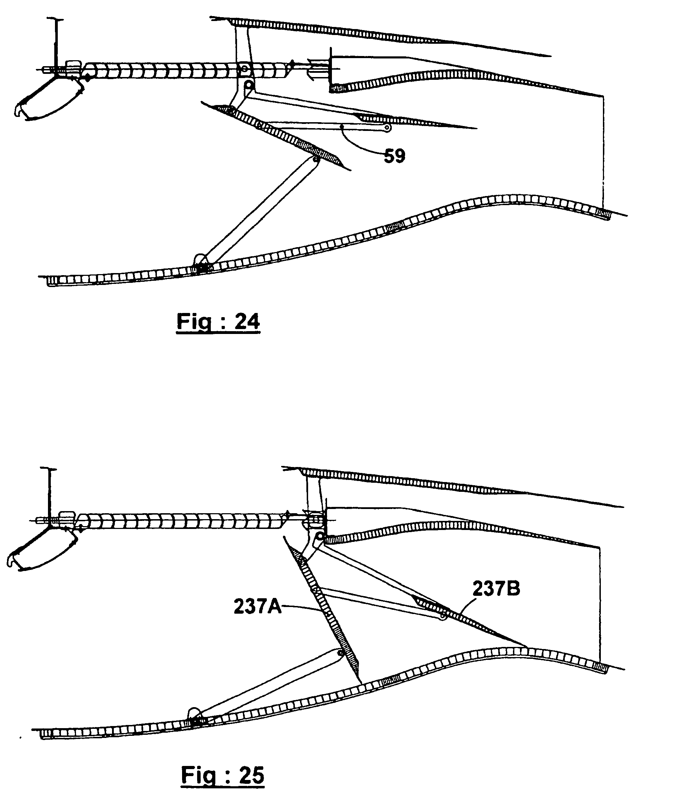

- la figure 24 représente l'inverseur de la figure 22, en cours d'ouverture ;
- la figure 25 représente l'inverseur de la figure 22, en position de jet inversé ;

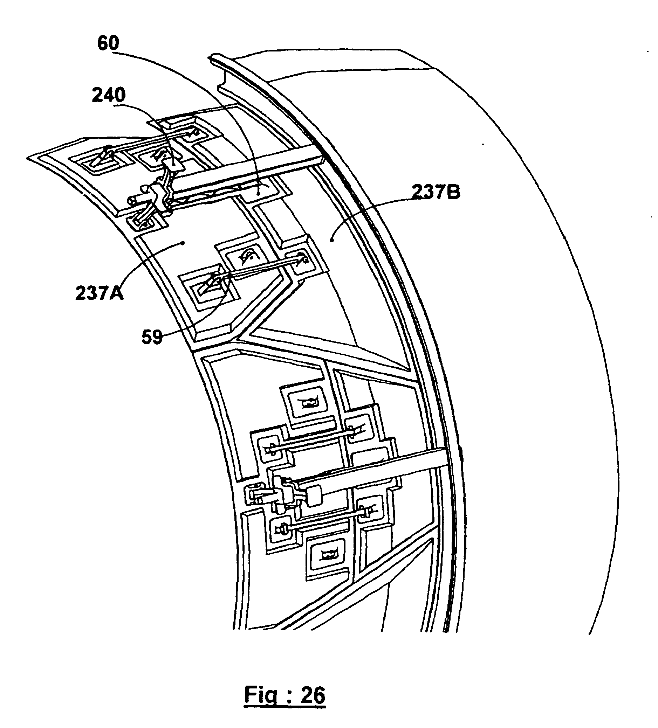

- la figure 26 représente selon une vue partielle en perspective l'inverseur de la figure 22 ;
- la figure 27 représente dans une vue analogue aux figures 11, 17 ou 22 l'inverseur conforme à l'invention comportant une autre variante de réalisation du système d'entraînement des volets ;
- la figure 28 représente l'inverseur de la figure 27 en début d'ouverture ;
- la figure 29 représente l'inverseur de la figure 27 en cours d'ouverture ;
- la figure 30 représenté l'inverseur de la figure 27 en position de jet inversé ;
- la figure 31 représente dans une vue analogue aux figures 11, 17, 22 ou 27 l'inverseur conforme à l'invention comportant une autre variante de réalisation du système d'entraînement des volets ;
- la figure 32 représente l'inverseur de la figure 31 en cours d'ouverture ;
- la figure 33 représente l'inverseur de la figure 31 en position de jet inversé ;
- la figure 34 représente une vue schématique en perspective de l'inverseur de la figure 31 montrant la position des volets en jet inversé.

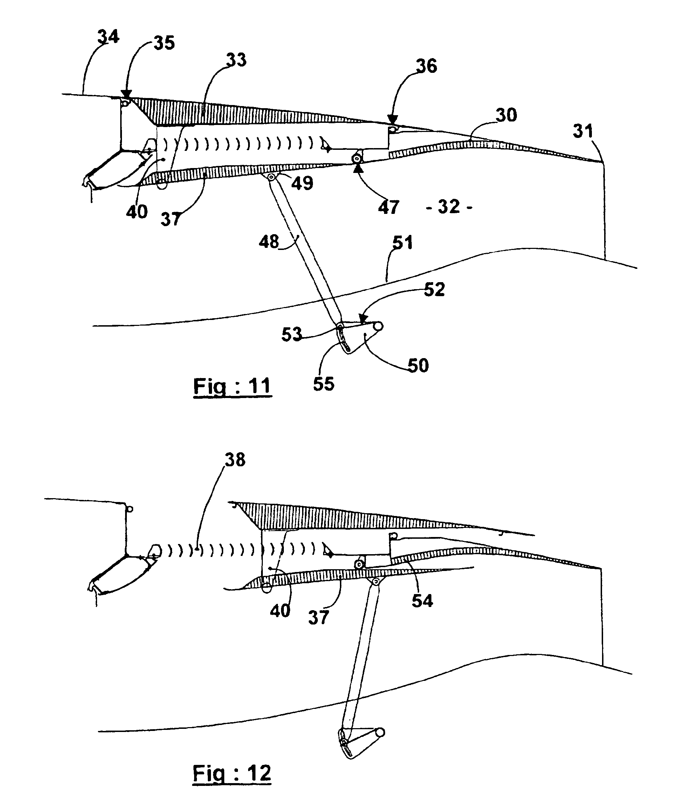

Selon un mode de réalisation de l'invention représenté sur les figures 11 à 15, un inverseur de poussée de turboréacteur fonctionne suivant le principe général d'un inverseur à grilles aubagées de déviation de type connu, comme précédemment décrit en référence aux figures 1 à 10. De manière remarquable et conforme à l'invention, le présent inverseur comporte une structure arrière fixe 30 qui forme, lors du fonctionnement du turboréacteur en poussée directe représenté sur la figure 11, l'extrémité aval 31 de la paroi externe du canal annulaire 32 de circulation de la veine de flux secondaire. La structure mobile externe se réduit ainsi à un simple capot mobile 33 se raccordant en jet direct à l'avant, à la paroi externe 34 de structure fixe de l'inverseur et à l'arrière, à la structure fixe arrière 30, avec interposition de joints d'étanchéité, respectivement avant 35 et arrière 36.

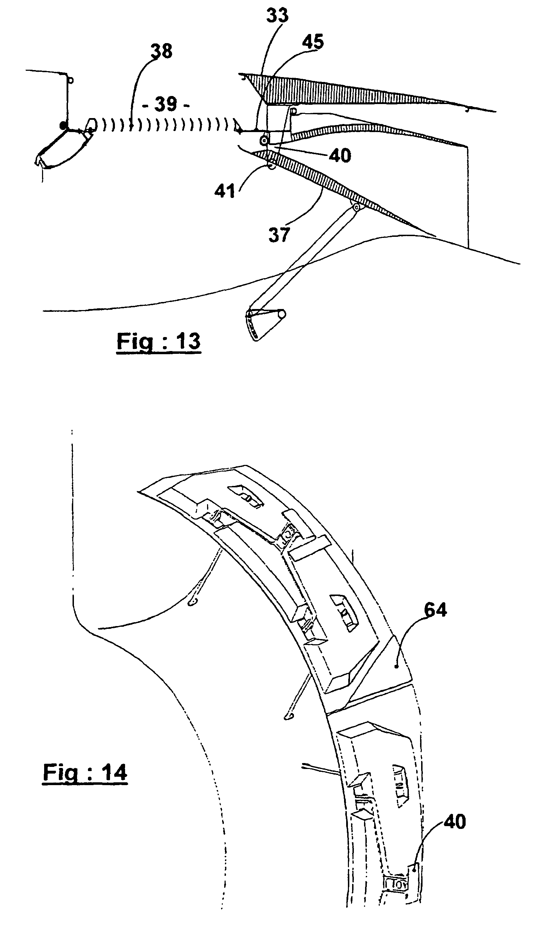

Comme il est connu, lors de l'inversion de poussée, comme représenté sur la figure 13, des volets 37 constituant un ensemble annulaire forment un obstacle au flux dans le canal annulaire 32 et des grilles 38 aubagées dévient le flux vers l'avant à travers le puits d'inversion 39 découvert après la translation vers l'arrière du capot mobile 33.

De manière remarquable et conforme à l'invention, par rapport aux solutions connues antérieures telles qu'illustrées par l'exemple représenté sur les figures 1 à 10, les rails secondaires 16 sont supprimés et pour le déplacement du capot mobile 33, des rails courts fixés sur des poutres de la structure fixe dans les zones dites à 12 heures et à 6 heures sont utilisés. Il en résulte que les capotages internes sont également supprimés et les capotages externes sont réduits.

En outre, les coins de volet 22 sont supprimés et dans l'exemple de réalisation représenté sur la figure 14 un volet 37 sur deux comporte un soyage 64, de manière à éviter les interférences en jet inversé. Les volets 37 sont articulés sur des ferrures 40 liées au capot mobile 33 et chaque volet 37 pivote autour d'un axe de rotation 41 porté par chaque ferrure 40.

Comme représenté sur les figures 14et 15, le déplacement du capot mobile 33 est commandé par un vérin, constitué dans l'exemple de réalisation représenté d'un actionneur 42 entraînant une vis sans fin 43 supportée par un palier arrière 44 porté par un cadre arrière 45 de grilles. La vis 43 entraîne un écrou 46 lié à la ferrure 40 de support des volets 37. La ferrure 40 se déplace entre deux grilles 38 durant l'ouverture et, en fin de course, dans une fente du cadre arrière 45 de grilles. La structure arrière fixe de l'inverseur porte des galets 47 en appui sur les volets 37 lors de leur déplacement qui est guidé par des bielles 48 articulées à une extrémité sur des chapes 49 portées par les volets 37 et à l'autre extrémité sur des ferrures fixes 50 portées par la paroi interne 51 du canal secondaire 32. Un ressort 52 en appui sur l'axe 53 de pied de la bielle 48 exerce un effort tendant à plaquer le volet 37 contre la structure fixe de l'inverseur, dans la position fermée de jet direct telle que représentée sur la figure 11. Comme le montre la figure 14, les ferrures 50 de pied et les chapes 49 de tête de bielle ne sont plus situées dans la veine, réduisant ainsi les pertes aérodynamiques.

La transition entre le fonctionnement en poussée directe ou position fermée de l'inverseur représentée sur la figure 11 et le fonctionnement en inversion de poussée ou position ouverte de l'inverseur représentée sur la figure 13 s'effectue en deux phases. Durant la première phase d'ouverture, représentée sur la figure 12, le capot mobile 33 et les volets 37 sont entraînés vers l'arrière par les actionneurs 42. L'interférence entre les volets 37 et le panneau interne 54 de la structure arrière fixe 30 est évitée par l'action des galets 47 sur les volets 37. Chaque volet 37 est plaqué sur les galets 47 par l'action des ressorts 52 par l'intermédiaire des bielles 48. L'axe 53 de pied de bielle se déplace dans le trou oblong 55 de la ferrure fixe 50.

De cette manière, l'obstruction de la veine de circulation du flux est retardée jusqu'à obtenir une ouverture suffisante du puits d'inversion.

Lors de la deuxième phase, lorsque l'axe 53 de pied de bielle vient en butée dans le trou oblong 55 de la ferrure fixe 50, le volet 37 est entraîné en rotation jusqu'à l'obstruction de la veine.

En position d'inversion de poussée représentée sur la figure 13, les grilles 38 de déviation de flux sont entièrement découvertes et les volets 37 forment obstacle au flux dans le canal. Les efforts résultant de la pression du flux s'exerçant sur les volets 37 sont repris par les bielles 48.

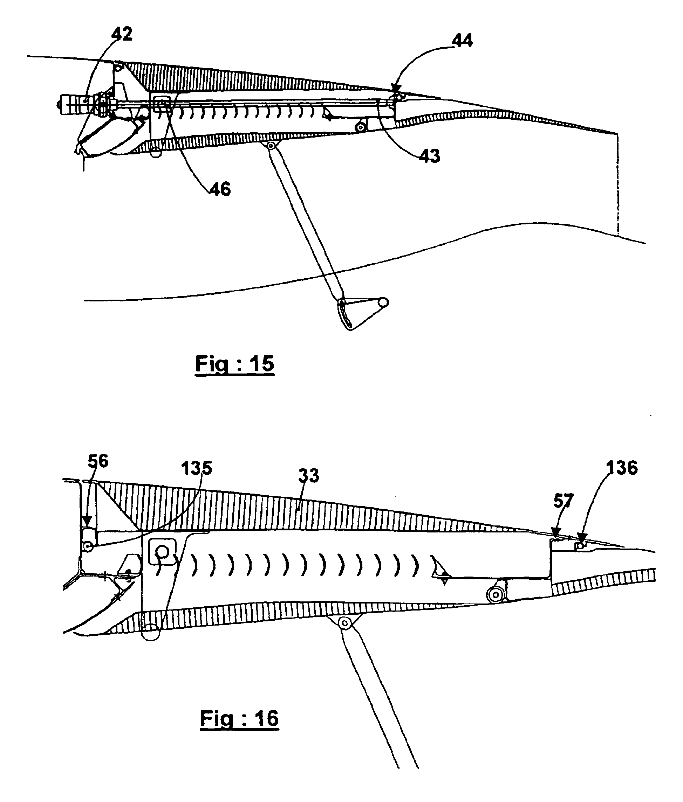

Selon la variante de réalisation représentée à la figure 16, en position de jet direct, le capot mobile 33 est modifié à l'avant et à l'arrière de manière à coopérer avec un appui avant 56 et un appui arrière 57 qui sont solidaires de la structure fixe de l'inverseur. Ces appuis 56 et 57 permettent de reprendre les efforts de pression qui s'exercent sur le capot mobile 33. L'emplacement des joints d'étanchéité avant 135 et arrière 136 est également modifié dans ce cas. Dans l'exemple représenté, l'étanchéité des joints 135 à l'avant est appliquée sur un rayon plus petit que celui de l'étanchéité par le joint 136 à l'arrière, ce qui rend le capot mobile 33 auto-fermant sous l'effet des efforts de pression.

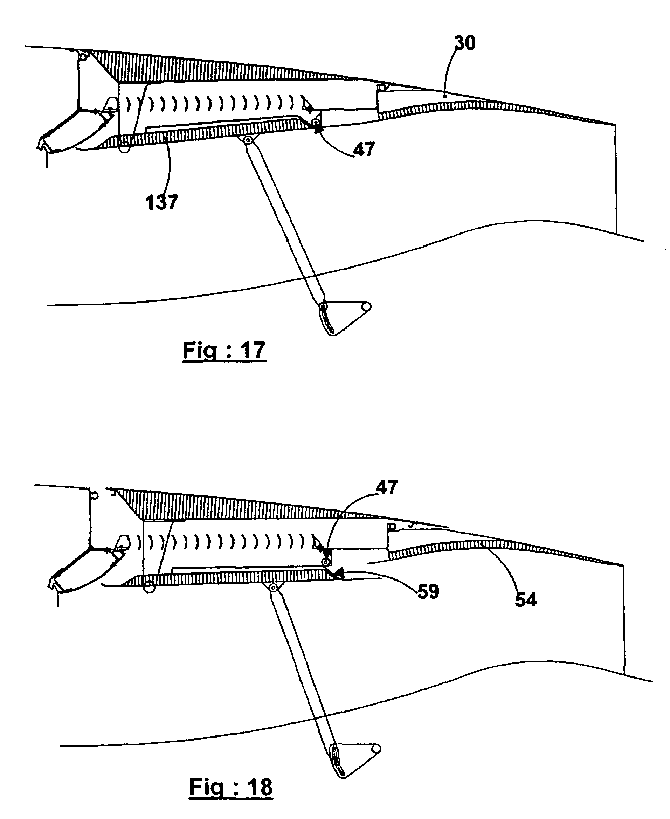

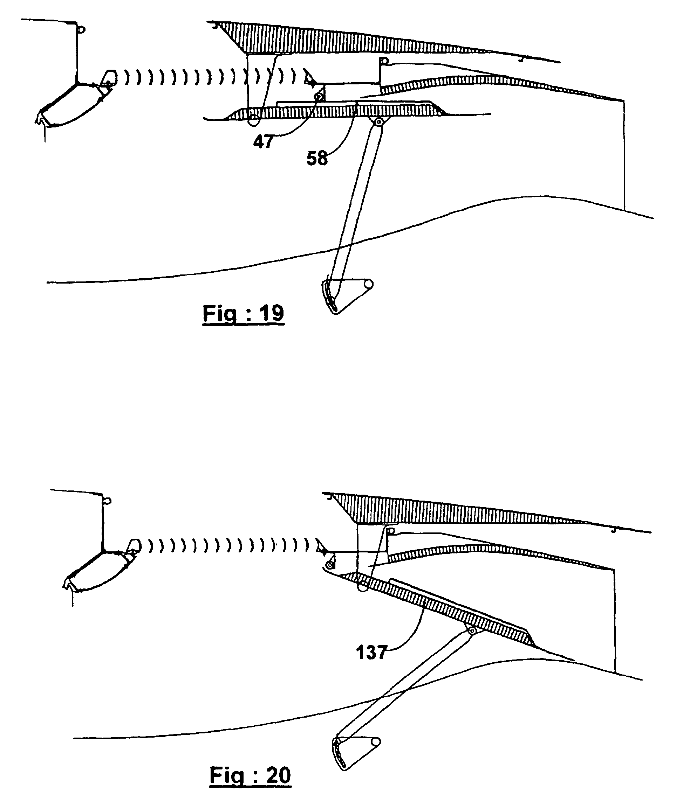

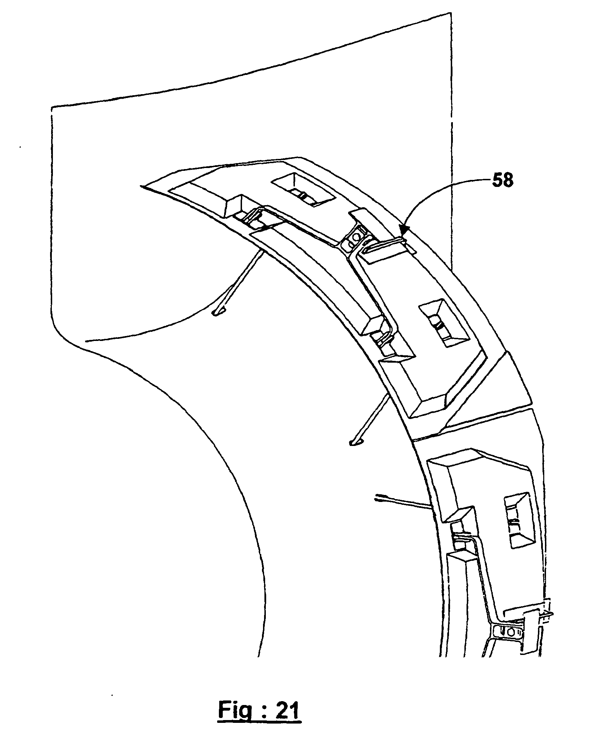

Selon une variante de réalisation de l'inverseur de poussée à grilles de déviation conforme à l'invention, représentée sur les figures 17 à 21, les volets 137 sont modifiés pour leur donner une épaisseur constante. Cette réalisation permet d'augmenter la rigidité et d'améliorer la tenue structurale des volets 137. La surface acoustique des volets 137 est en outre augmentée, ce qui améliore les performances en atténuation acoustique. Dans ce cas, afin d'éviter toute interférence entre les volets 137 et le panneau interne 54 de la structure arrière fixe 30 lors de l'ouverture, une rampe 58 est disposée sur chaque volet 137 et le galet 47 roule sur la rampe 58 de manière à décaler le volet 137.

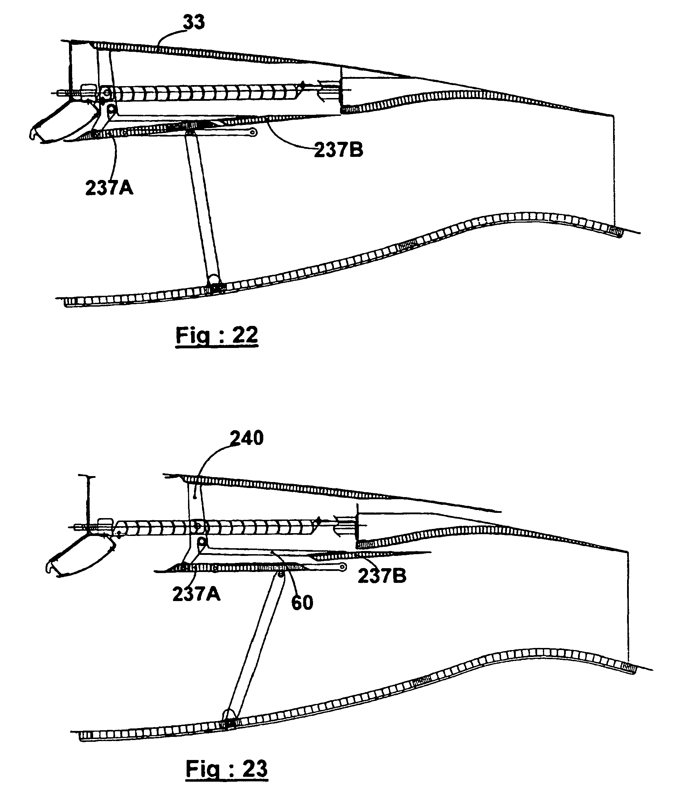

Les réalisations précédentes qui ont été décrites en référence aux figures 11 à 21 présentent un inconvénient lors du fonctionnement en inversion de poussée. En effet, une position inclinée dans la veine des volets 37 provoque une recirculation du flux dans la cavité formée. Pour améliorer l'écoulement du flux en jet inversé, le volet doit prendre une position plus verticale, dans un plan sensiblement perpendiculaire à la direction générale du flux circulant dans le canal. Dans ce but, le volet 137 est en deux parties 237A et 237B. En jet direct, comme représenté sur la figure 22, la paroi externe du canal de circulation du flux est reconstituée par les volets avant formant les premières parties 237A et par les volets arrière juxtaposés formant les deuxièmes parties 237B. Le capot mobile 33 supporte les volets avant 237A par l'intermédiaire de ferrures 240 et les volets arrière 237B sont reliés chacun à un volet avant 237A par une biellette 59 et à la ferrure 240 de support par un bras 60. Lors du fonctionnement en inversion de poussée, en position ouverte, le volet arrière 237B vient se placer en-dehors du flux, en arrière du volet avant 237A qui prend ainsi une position moins inclinée dans le canal.

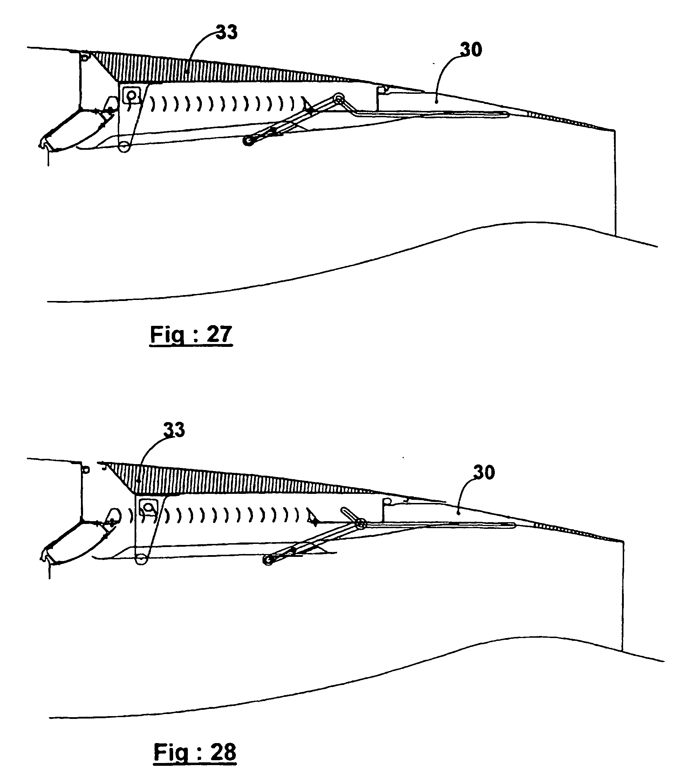

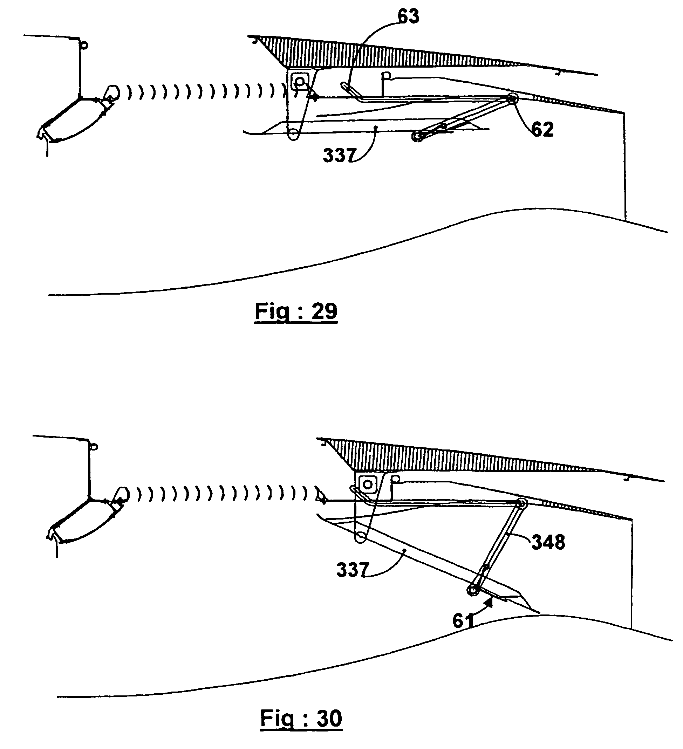

Selon une autre variante de réalisation, le système d'entraînement des volets de l'inverseur, comme représenté sur les figures 27 à 30, est modifié pour permettre la suppression des bielles 48 de guidage des volets dans la veine fluide, réduisant ainsi les pertes aérodynamiques. Dans ce but, les bielles 348 sont situées à l'intérieur de la structure fixe arrière 30 de l'inverseur. Chaque bielle 348 est articulée à une extrémité sur un volet 337 avec l'interposition d'un ressort de torsion 61. L'autre extrémité de la bielle 348 porte un galet 62 qui roule dans une rainure 63 ménagée sur la structure fixe arrière 30. Le ressort 61 plaque chaque bielle 348 sur son volet 337 jusqu'au contact avec une butée solidaire du volet. Le profil des rainures 63 est déterminé de manière à imposer au volet 337 la cinématique recherchée, notamment en décalant le volet 337 en début d'ouverture, comme représenté sur la figure 28. Un autre avantage obtenu dans cette réalisation concerne la simplification de construction de la paroi interne du canal par la suppression des pieds de bielle.

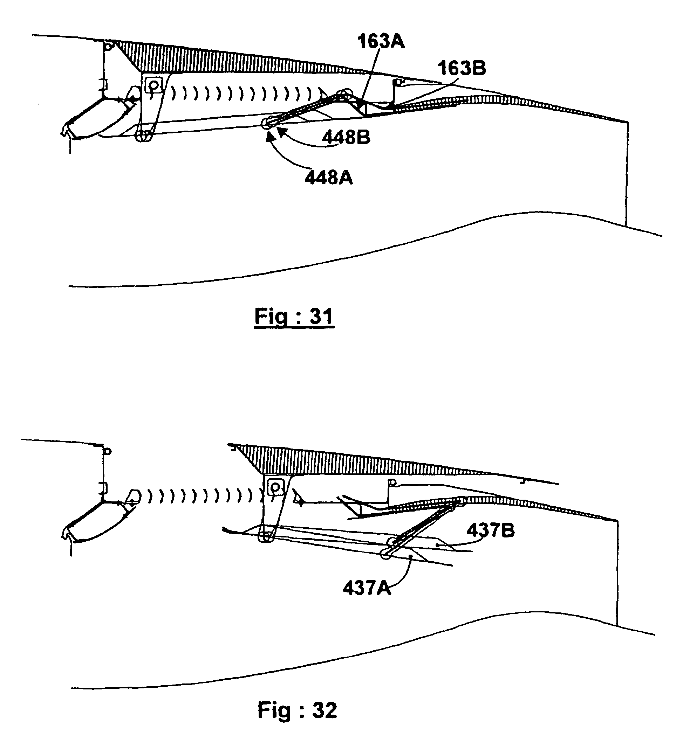

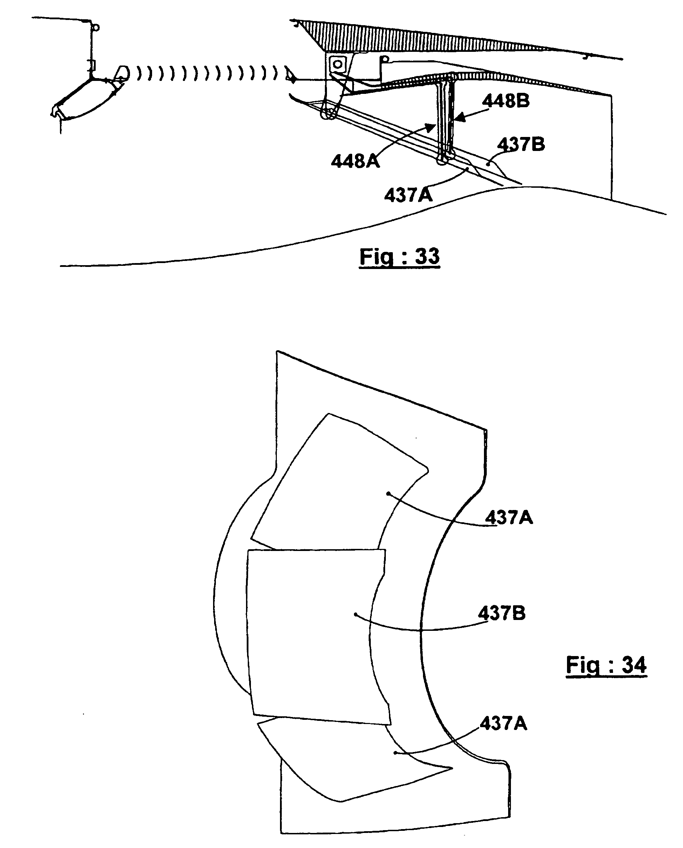

Les soyages 64 ménagés sur les volets 37 pour éviter les interférences entre les volets en cours de déplacement présentent l'inconvénient de générer des pertes aérodynamiques en jet direct. Pour l'éviter, une autre variante de réalisation, représentée sur les figures 31 à 34 prévoit l'installation de cinématiques différentes pour un volet sur deux. Les éléments du système d'entraînement d'un volet sur deux sont dans ce cas décalés l'un par rapport à l'autre : les bielles 448A et 448B, les rainures 163A et 163B, les articulations sur les ferrures de support, de manière que les deux volets 437A et 437B aient des positions décalées entre elles pendant toute l'ouverture.

## Revendications

1. Inverseur de poussée de turboréacteur à double flux comportant un ensemble mobile formant une partie de la paroi externe de nacelle, complété par un ensemble annulaire de volets (37) formant une partie de la paroi externe du canal annulaire (32) de la veine froide en position de poussée directe et, en position d'inversion de poussée, ledit ensemble étant translaté vers l'arrière en découvrant des grilles aubagées (38) de déviation de flux et les volets pivotant pour obstruer ledit canal (32), et étant constitué d'un capot mobile (33) équipé de ferrures (40) supportant les volets (37), **caractérisé en ce qu'**il comporte une structure arrière fixe (30) supportant des galets (47) roulant sur les volets (37) ou une rampe des volets, de manière à décaler les volets (37) afin d'éviter toute interférence entre structure arrière fixe et volets pendant une première phase d'ouverture.

2. Inverseur de poussée de turboréacteur selon la revendication 1 **caractérisé en ce qu'**un volet (37) sur deux comporte un soyage (64) de manière à éviter toute interférence en jet inversé.

3. Inverseur de poussée de turboréacteur selon l'une quelconque des revendications 1 ou 2 **caractérisé en ce qu'**il comprend des bielles (48) articulées sur des chapes (49) portées par les volets (37) et des ferrures de pied (50) portées par la paroi interne (51) du canal secondaire (32), lesdites chapes et lesdites ferrures de pied étant placées en dehors de la veine froide.

4. Inverseur de poussée de turboréacteur selon l'une quelconque des revendications 1 à 3 **caractérisé en ce que** le capot mobile (33), en position fermée, est maintenu à l'avant et à l'arrière sur des appuis (56, 57) reprenant les efforts de pression.

5. Inverseur de poussée de turboréacteur selon l'une quelconque des revendications 1 à 4 **caractérisé en ce que** le capot mobile (33) possède un joint avant (135) situé sur un rayon plus petit qu'un joint arrière (136) de manière que la résultante des efforts de pression tend à maintenir le capot mobile (33) en position fermée en jet direct.

6. Inverseur de poussée de turboréacteur selon l'une quelconque des revendications 1 à 5 **caractérisé en ce que** les volets (137) ont une épaisseur constante et portent une rampe (58) sur laquelle roule le galet (47) d'appui de manière à décaler le volet (137) en début d'ouverture en évitant l'interférence avec le panneau interne (54) de la structure arrière fixe (30).

7. Inverseur de poussée de turboréacteur selon l'une quelconque des revendications 1 à 5 **caractérisé en ce que** chaque volet (237) comprend une première partie formant volet avant (237A) et une deuxième partie juxtaposée en jet direct formant volet arrière (237B), le volet arrière (237B) étant relié à la ferrure (240) de support du capot mobile (33) par un bras (60) et au volet avant (237A) par une biellette (59) de manière à escamoter le volet arrière (237B) à l'arrière du volet avant (237A) dans le canal et à donner au volet avant (237A) une position plus verticale, lors du fonctionnement en inversion de poussée.

8. Inverseur de poussée de turboréacteur selon la revendication 1 **caractérisé en ce que** les volets (337) sont guidés par des bielles (348), chacune (348) articulée à une extrémité sur un volet (337) avec interposition d'un ressort de torsion (61) plaquant la bielle (348) sur le volet (337) et à l'autre extrémité au moyen d'un galet (62) roulant dans une rainure (63) ménagée sur la structure fixe arrière (30) et ayant un profil déterminé permettant un décalage du volet (337) en début d'ouverture, les bielles (348) étant situées à l'intérieur de la structure fixe arrière (30) en jet direct.

9. Inverseur de poussée de turboréacteur selon l'une quelconque des revendications 1 et 3 à 8 **caractérisé en ce que** les éléments du système d' entrainement d'un volet (437A, 437B) sur deux sont décalés l'un par rapport à l'autre de manière que deux volets adjacents (437A, 437B) ont des positions décalées entre elles pendant toute l'ouverture en évitant les interférences.

## Claims

1. Turbofan engine thrust reverser comprising a displaceable assembly forming one portion of the external wall of the nacelle, complemented by an annular assembly of flaps (37) forming one portion of the external wall of the annular cold flow duct (32) in the forward thrust position and, in the reverse thrust position, said assembly being moved in translation toward the rear, exposing vane cascades (38) for deflecting the flow and the flaps, pivoting to block said duct (32) and consisting of a movable cowl (33) equipped with fittings (40) supporting the flaps (37), **characterised in that** it comprises a fixed rear structure (30) supporting rollers (47) rolling on the flaps (37) or a flap ramp, so as to offset the flaps (37) in order to prevent any interference between the fixed rear structure and the flaps during a first opening phase.

2. Turbofan engine thrust reverser according to claim 1, **characterised in that** every second flap (37) comprises a joggle so (64) as to prevent any interference during thrust reversal.

3. Turbofan engine thrust reverser according to any one of claims 1 or 2, **characterised in that** it has connecting rods (48) hinged on clevises (49) supported by the flaps (37) and fittings (50) at the connecting rod small end, supported by the inner wall (51) of the bypass duct (32), said clevises and said fittings at the connecting rod small end being positioned outside the cold flow path.

4. Turbofan engine thrust reverser according to any one of claims 1 to 3, **characterised in that** the movable cowl (33), in the closed position, is held at the front and at the rear on supports (56, 57) absorbing the pressure forces.

5. Turbofan engine thrust reverser according to any one of claims 1 to 4, **characterised in that** the movable cowl (33) has a front seal (135) located on a smaller radius than a rear seal (136) so that the resultant of the pressure forces is designed to hold the movable cowl (33) in the closed position in the forward thrust position.

6. Turbofan engine thrust reverser according to any one of claims 1 to 5, **characterised in that** the flaps (137) are of uniform thickness and carry a ramp (58) on which the support roller (47) rolls so as to offset the flap (137) at the start of opening, preventing interference with the inner panel (54) of the fixed rear structure (30).

7. Turbofan engine thrust reverser according to any one of claims 1 to 5, **characterised in that** each flap (237) comprises a first portion forming a front flap (237A) and a second adjacent portion in the forward thrust position forming the rear flap (237B), the rear flap (237B) being connected to the support fitting (240) of the movable cowl (33) by an arm (60) and to the front flap (237A) by a link rod (59) so as to retract the rear flap (237B) at the rear of the front flap (237A) in the duct and to provide the front flap (237A) with a more vertical position during reverse thrust operation.

8. Turbofan engine thrust reverser according to claim 1, **characterised in that** the flaps (337) are guided by connecting rods (348), each connecting rod (348) hinged at one end to a flap (337) with the insertion of a torsion spring (61) pressing the connecting rod (348) against the flap (337) and at the other end by means of a roller (62) rolling in a slot (63) arranged on the fixed rear structure (30) and having a specific profile allowing the flap (337) to be offset at the start of opening, the connecting rods (348) being situated inside the fixed rear structure (30) during forward thrust.

9. Turbofan engine thrust reverser according to any one of claims 1 and 3 to 8, **characterised in that** the elements of the system for driving every second flap (437A, 437B) are mutually offset so that two adjacent flaps (437A, 437B) have mutually offset positions during the entire open period, preventing interference.

## Patentansprüche

1. Schubumkehrvorrichtung für ein Zweikreis-TL-Triebwerk, umfassend eine bewegliche Einheit, die einen Teil der Außenwand einer Gondel bildet, ergänzt durch eine ringförmige Klappeneinheit (37), die einen Teil der Außenwand des ringförmigen Kanals (32) des kalten Kreises in der Position mit direktem Schub bildet, und wobei in der Position der Schubumkehr die Einheit nach hinten verschoben wird, wobei schaufelartige Gitter (38) zur Ablenkung des Stroms freigelegt werden und die Klappen schwenken, um den Kanal (32) zu verschließen, und wobei diese von einer beweglichen Kappe (33) gebildet ist, die mit Beschlägen (40), die die Klappen tragen (37) ausgestattet ist, **dadurch gekennzeichnet, dass** sie eine feste hintere Struktur (30) umfasst, die Rollen (47) trägt, die auf den Klappen (37) oder einer Rampe der Klappen rollen, um die Klappen (37) zu versetzen, um jede Interferenz zwischen der festen hinteren Struktur und den Klappen während einer ersten Öffnungsphase zu vermeiden.

2. Schubumkehrvorrichtung eines TL-Triebwerks nach Anspruch 1, **dadurch gekennzeichnet, dass** eine von zwei Klappen (37) einen Durchzug (64) umfasst, um jede Interferenz bei umgekehrtem Strahl zu vermeiden.

3. Schubumkehrvorrichtung eines TL-Triebwerks nach einem der Ansprüche 1 oder 2, **dadurch gekennzeichnet, dass** sie Stangen (48), die auf Abdeckungen (49) angelenkt sind, die von den Klappen (37) getragen werden, und Fußbeschläge (50) umfasst, die von der Innenwand (51) des Sekundärkanals (32) getragen werden, wobei die Abdeckungen und die Fußbeschläge außerhalb des kalten Kreises angeordnet sind.

4. Schubumkehrvorrichtung eines TL-Triebwerks nach einem der Ansprüche 1 bis 3, **dadurch gekennzeichnet, dass** die bewegliche Kappe (33) in der geschlossenen Position vorne und hinten auf Abstützungen (56, 57) gehalten wird, die die Druckkräfte aufnehmen.

5. Schubumkehrvorrichtung eines TL-Triebwerks nach einem der Ansprüche 1 bis 4, **dadurch gekennzeichnet, dass** die bewegliche Kappe (33) eine vordere Dichtung (135), die sich auf einem geringeren Radius als eine hintere Dichtung (136) befindet, umfasst, so dass die Resultierende der Druckkräfte dazu neigt, die bewegliche Kappe (33) bei direktem Strahl in geschlossener Position zu halten.

6. Schubumkehrvorrichtung eines TL-Triebwerks nach einem der Ansprüche 1 bis 5, **dadurch gekennzeichnet, dass** die Klappen (137) eine konstante Dicke aufweisen und eine Rampe (58) tragen, auf der die Stützrolle (47) rollt, um die Klappe (137) am Öffnungsbeginn zu versetzen, um die Interferenz mit der Innenplatte (54) der festen hinteren Struktur (30) zu vermeiden.

7. Schubumkehrvorrichtung eines TL-Triebwerks nach einem der Ansprüche 1 bis 5, **dadurch gekennzeichnet, dass** jede Klappe (237) einen ersten Teil, der eine vordere Klappe (237A) bildet und einen zweiten, im direkten Strahl daneben angeordneten Teil, der eine hintere Klappe (237B) bildet, umfasst, wobei die hintere Klappe (237B) mit dem Stützbeschlag (240) der beweglichen Kappe (33) durch einen Arm (60) und mit der vorderen Klappe (237A) durch einen Schwingarm (59) verbunden ist, um die hintere Klappe (237B) hinter der vorderen Klappe (237A) in den Kanal einzuziehen und der vorderen Klappe (237A) eine vertikalere Position beim Betrieb mit Schubumkehr zu verleihen.

8. Schubumkehrvorrichtung eines TL-Triebwerks nach Anspruch 1, **dadurch gekennzeichnet, dass** die Klappen (337) von Stangen (348) geführt werden, wobei jede (348) an einem Ende auf einer Klappe (337) angelenkt ist, wobei eine Torsionsfeder (61) dazwischen angeordnet ist, die die Stange (348) auf die Klappe (337) drückt, und am anderen Ende mit Hilfe einer Rolle (62) befestigt ist, die in einer Nut (63) rollt, die auf der festen hinteren Struktur (30) vorgesehen ist und ein bestimmtes Profil aufweist, das einen Versatz der Klappe (337) am Öffnungsbeginn ermöglicht, wobei die Stangen (348) im Inneren der festen hinteren Struktur (30) bei direktem Strahl angeordnet sind.

9. Schubumkehrvorrichtung eines TL-Triebwerks nach einem der Ansprüche 1 und 3 bis 8, **dadurch gekennzeichnet, dass** die Elemente des Antriebssystems einer von zwei Klappen (437A, 437B) zueinander derart versetzt sind, dass zwei aneinander grenzende Klappen (437A, 437B) zueinander versetzte Positionen während der gesamten Öffnung aufweisen, wodurch Interferenzen vermieden werden.
